**Europäisches Patentamt**

**European Patent Office**

**Office européen des brevets**

(19)

(11) Veröffentlichungsnummer : **0 414 946 B1**

(12)

# EUROPÄISCHE PATENTSCHRIFT

(45) Veröffentlichungstag der Patentschrift :
**04.11.92 Patentblatt 92/45**

(51) Int. Cl.$^5$ : **B60H 1/00,** F16B 5/00

(21) Anmeldenummer : **89116120.0**

(22) Anmeldetag : **31.08.89**

(54) **Aus zumindest zwei Gehäuseteilen dichtend zusammensetzbares Gehäuse.**

(43) Veröffentlichungstag der Anmeldung :
**06.03.91 Patentblatt 91/10**

(45) Bekanntmachung des Hinweises auf die
Patenterteilung :
**04.11.92 Patentblatt 92/45**

(84) Benannte Vertragsstaaten :
**DE ES FR GB IT**

(56) Entgegenhaltungen :
**EP-A- 0 089 500**
**AU-B- 520 832**
**FR-A- 2 292 144**

(73) Patentinhaber : **SIEMENS**
**AKTIENGESELLSCHAFT**
**Wittelsbacherplatz 2**
**W-8000 München 2 (DE)**

(72) Erfinder : **Schramm, Michael, Dipl.-Ing. (FH)**
**Am Schulberg 17**
**W-8632 Neustadt (DE)**

## Beschreibung

Die Erfindung bezieht sich auf ein aus zumindest zwei Gehäuseteilen dichtend zusammensetzbares Gehäuse gemäß Oberbegriff des Anspruchs 1; derartige aus Kunststoff gespritze Gehäuse sind z.B. für Heizung- und/oder Klimageräte in Kraftfahrzeugen bekannt.

Bei den bekannten Gehäusen werden die gegeneinander liegenden Kanten der Gehäusehälften derart ausgebildet, daß die Kante der einen Gehäusehälfte trapezgewölbeartig die Kante der anderen Gehäusehälfte mit gegenseitigem großen Spiel übergreift; zur Abdichtung der beiden Gehäusehälften wird zwischen die beiden Anlagekanten ein gesondertes Dichtmaterial, z.B. in Form von Dichtkitt oder Dichtschnüren, zwischengelegt.

Eine demgegenüber insbesondere montagetechnisch vereinfachte und auch unter Berücksichtigung von notwendigen Spielpassungen und serienfertigungsbedingter Toleranzen gewährleistete Abdichtung zwischen den beiden Gehäusehälften kann nach der Erfindung durch eine Konstruktion gemäß Anspruch 1 erreicht werden, wobei zweckmäßigerweise die erfindungsgemäß geformten Dichtränder als einstückige Bestandteile an die jeweiligen Gehäusehälften mitangespritzt sind.

Durch die mit dem Gehäuseoberteil verbundenen Schenkel und diese beim gegenseitigen Zusammenbau der Gehäuseteile dichtend umgreifenden Schenkel des Dichtrandes des Gehäuseunterteils kann eine hinreichende Abdichtung ohne gesonderte Dichtmaterialien unmittelbar beim Zusammenbau beider Gehäusehälften erreicht werden, wobei mit einer geringen Einpreßkraft in Montagerichtung durch leichtes Verbiegen der wie Dichtlippen wirkenden Schenkelenden des Dichtrandes des Gehäuseoberteils eine dichtende Anlage an die Innenflächen der Schenkel des Dichtrandes des Gehäuseunterteils gewährleistet werden kann.

Als Montagehilfe ist nach einer Ausgestaltung der Erfindung eine Aufweitung der freien Schenkelenden des Dichtrandes des Gehäuseunterteils im Sinne eines Einführtrichters für die einsteckbaren freien Schenkelenden des Dichtrandes des Gehäuseoberteils vorgesehen; dabei kann bei gewährleisteter Abdichtung ein hinreichender Spielabstand für die beiden gegeneinander zu montierenden Gehäuseteile durch ein Untermaß des maximalen Einsteck-Außendurchmessers des Dichtrandes des Gehäuseoberteils im Bereich der jochseitigen Schenkelenden im Vergleich zur lichten Weite zwischen den Innenflächen der freien Schenkelenden des Dichtrandes des Gehäuseunterteils ermöglicht werden.

Die Erfindung wird im folgenden anhand eines schematisch dargestellten Ausführungsbeispiels in der Zeichnung näher erläutert; darin zeigen:

FIG 1 einen an das Gehäuseoberteil angeformten Dichtrand vor dem Zusammenbau beider Gehäuseteile,

FIG 2 einen an das Gehäuseunterteil angeformten Dichtrand vor dem Zuammenbau beider Gehäuseteile,

FIG 3 die Dichtränder gemäß FIG 1 und FIG 2 in gegenseitiger dichtender Zuordnung nach dem Zusammenbau beider Gehäusehälften zu einem gemeinsamen Gehäuse.

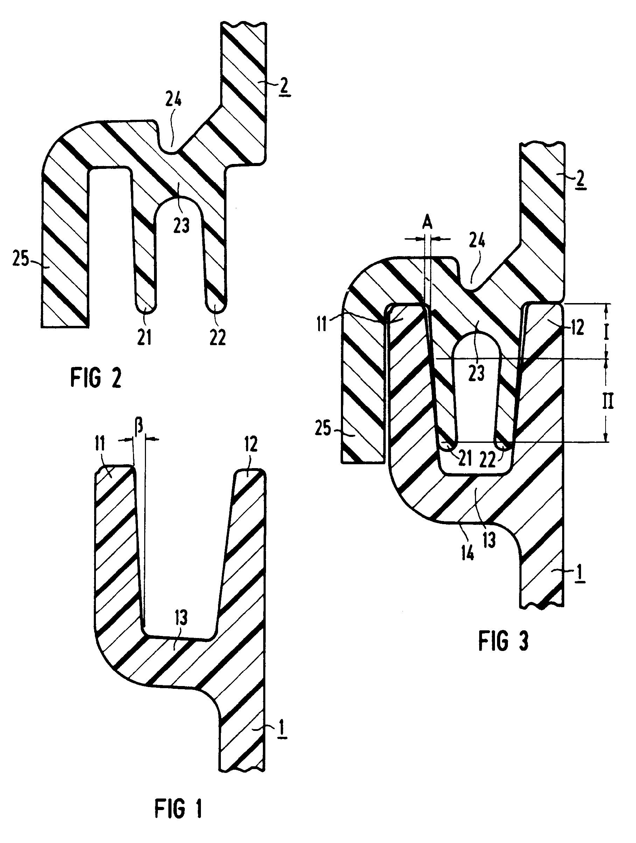

FIG 1 zeigt den an ein senkrechtes Wandteil des Gehäuseunterteils 1 angeformten Dichtrand mit einem V-förmigen Querschnitts-Profil mit durch ein Joch 13 verbundenen Schenkeln 11,12. FIG 2 zeigt den an ein senkrechtes Wandteil des Gehäuseoberteils 2 angeformten korrespondierenden Dichtrand mit zwei durch ein Joch 23 verbundenen Schenkeln 21,22.

FIG 3 zeigt die beiden dichtend ineinandergreifenden Dichtränder des Gehäuseunterteils 1 und des Gehäuseoberteils 2 nach deren Zusammenbau. Durch die erfindungsgemäße Ausbildung und Dimensionierung des Joches 23 und der Schenkel 21,22 des Dichtrandes des Gehäuseoberteils 2 einerseits und des Joches 13 andererseits bzw. der unter einem Neigungswinkel $\beta$ im Sinne eines Einführtichters ausgebildeten Schenkel 11,12 des Dichtrandes des Gehäuseunterteils 1 sowie des maximalen Einsteck-Außendurchmessers des Dichtrandes des Gehäuseoberteils 2 im Vergleich zur lichten Weite zwischen den freien Schenkelenden 11,12 des Dichtrandes des Gehäuseunterteils 1 ergibt sich folgende in FIG 3 dargestellte vorteilhafte Abdichtung.

Die eigentliche Abdichtung gegen eine unerwünschte Luftströmung erfolgt im Bereich II geringerer Steifigkeit der Schenkel 21,22, die sich beim Zusammenbau der Gehäuseteile unter Vorspannung an die Innenkontur der Schenkel 11,12 anlegen, wobei im Bereich I relativ hoher Steifigkeit der jochseitigen Enden der Schenkelenden 21,22 eine Spielpassung A zum Ausgleich von Toleranzen gewährleistet ist. Bei einer z.B. angenommenen waagrechten Verschiebung des Gehäuseoberteils 2 nach links gegenüber dem Gehäuseunterteil 1 verstärkt sich die Biegung des freien Schenkelendes des Schenkels 21, während die dichtende Anlagekraft auf das freie Schenkelende des Schenkels 22 abnimmt; dies bedeutet, daß bei einem gegenseitigen Versatz von Gehäuseoberteil 2 und Gehäuseunterteil 1 in jedem Fall eine dichtende Anlage durch zumindest einen Schenkel des Dichtrandes des Gehäuseoberteils 2 an der Innenseite eines Schenkels des Dichtrandes des Gehäuseunterteils 1 gewährleistet ist. Je mehr sich dabei die Dichtkraft des einen Schenkels erniedrigt, um so mehr wird die des anderen Schenkels erhöht, so daß in jedem Fall eine Dichtwirkung sichergestellt ist.

Zum Schutz des beim Zusammenbau von Gehäuseunterteil 1 und Gehäuseoberteil 2 sich selbstdichtend ineinanderfügenden Anlagekanten, insbesondere bei der Fertigung und beim anschließenden Transport, ist nach einer Ausgestaltung der Erfindung an den Dichtrand des Gehäuseoberteils 2 ein den gehäuseäußeren Schenkel 11 des Dichtrandes des Gehäuseunterteils 1 übergreifender, mit dem Joch 23 des Dichtrandes des Gehäuseoberteils 2 verbundener Schutzsteg 25 angeformt.

Zur gegenseitigen Fixierung der beiden zusammenmontierten Gehäuseteile können Klemmfedern vorgesehen werden, die beide Gehäuseteile in ihrer Montagestellung gegeneinander verspannen. Zur einfachen Fixierung einer solchen aufspannbaren Klemmfeder sind nach einer Ausgestaltung der Erfindung am Dichtrand des Gehäuseoberteils 2 eine Nut 24 und am Dichtrand des Gehäuseunterteils 1 ein Absatz 14 vorgesehen, auf dem der eine Bügel der Klemmfeder aufliegt, dessen anderer Bügel in die Nut 24 einschnappt.

**Patentansprüche**

1. Aus zumindest zwei Gehäuseteilen (Gehäuseunterteil 1; Gehäuseoberteil 2) dichtend zusammensetzbares Gehäuse, insbesondere gespritztes bzw. gegossenes Kunststoffgehäuse für ein Kraftfahrzeug-Heiz- oder Klimagerät, **gekennzeichnet** durch einen ersten Dichtrand an der Anlagekante des einen Gehäuseteils (Gehäuseunterteil 1) mit V-förmigem bzw. U-förmigem, in Richtung der Anlagekante des anderen Gehäuseteils (Gehäuseoberteil 2) geöffnetem Querschnitts-Profil mit Schenkeln (11,12) und diese verbindendem Joch (13) relativ hoher Steifigkeit und einem zweiten Dichtrand an der Anlagekante des anderen Gehäuseteils (Gehäuseoberteil 2) mit einem im Sinne zwischen die Schenkel (11,12) des ersten Dichtrandes gegenseitig schenkeldichtender Einsteckbarkeit korrespondierendem V-förmigen bzw. U-förmigem Gegenprofil mit Schenkeln (21,22) und diese verbindendem Joch (23) im Bereich der jochseitigen Schenkelenden (Bereich I) relativ hoher und im Bereich der freien Schenkelenden (Bereich II) demgegenüber geringerer Steifigkeit.

2. Gehäuse nach Anspruch 1, **gekennzeichnet** durch Aufweitung (Neigungswinkel β) der freien Schenkelenden (11,12) des Dichtrandes des einen Gehäuseteils (Gehäuseunterteil 1) im Sinne eines Einführtrichters für die einsteckbaren freien Schenkelenden (21,22) des Dichtrandes des anderen Gehäuseteils (Gehäuseoberteil 2).

3. Gehäuse nach Anspruch 1 und/oder 2, **gekennzeichnet** durch ein Untermaß (Spielpassung A) des maximalen Einsteck-Außendurchmessers des Dichtrandes des anderen Gehäuseteils (Gehäuseoberteil 2) im Bereich der jochseitigen Schenkelenden (21,22) im Vergleich zur lichten Weite zwischen den freien Schenkelenden (11,12) des Dichtrandes des einen Gehäuseteils (Gehäuseunterteil 1).

4. Gehäuse nach Anspruch 1, **gekennzeichnet** durch einen den gehäuseäußeren Schenkel (11) des Dichtrandes des einen Gehäuseteils (Gehäuseunterteil 1) übergreifenden, mit dem Joch (23) des Dichtrandes des anderen Gehäuseteils (Gehäuseoberteil 2) verbundenen Schutzsteg (25).

5. Gehäuse nach Anspruch 1, **dadurch gekennzeichnet**, daß der Dichtrand des einen Gehäuseteils (Gehäuseunterteil 1) und/oder der Dichtrand des anderen Gehäuseteils (Gehäuseoberteil 2) mit zumindest einer Klemmfederaufnahme im Sinne einer die Gehäuseteile (1;2) gegenseitig verspannenden, von außen aufsetzbaren Klemmfeder versehen sind.

6. Gehäuse nach Anspruch 5, **dadurch gekennzeichnet** daß der eine Dichtrand des anderen Gehäuseteils (Gehäuseoberteil 2) mit einer hinterschneidenden Nut (24) und/oder der Dichtrand des einen Gehäuseteils (Gehäuseunterteil 1) mit einem Absatz (14) zum fixierbaren Aufsetzen eine Klemmfeder versehen sind.

7. Gehäuse nach einem der Ansprüche 1 bis 6, **dadurch gekennzeichnet**, daß der Dichtrand des einen Gehäuseteils (Gehäuseunterteil 1) und/oder der Dichtrand des anderen Gehäuseteils (Gehäuseoberteil 2) und gegebenenfalls der Schutzsteg (25) und/ oder die Klemmfederaufnahmen (Absatz 14; Nut 24) jeweils einstückiger Bestandteil des anderen Gehäuseteils (Gehäuseoberteil 2) bzw. des einen Gehäuseteils (Gehäuseunterteil 1) sind.

**Claims**

1. Housing which can be tightly assembled from at least two housing parts (lower housing part 1; upper housing part 2), in particular an extruded or cast plastics housing for the heating or air-conditioning equipment of a motor vehicle, characterized by a first sealing edge at the fitting edge of the one housing part (lower housing part 1) with V-shaped or U-shaped cross-sectional profile opened in the direction of the fitting edge of the other housing part (upper housing part 2) with limbs (11,12) and yoke (13) of relatively great rigidity connecting these, and a second sealing edge at the fitting edge of the other housing part (upper housing part 2) with a corresponding V-shaped or U-shaped counter profile in the direction between the limbs (11,12) of the first sealing edge of mutually limb-sealing insertion capacity, with limbs (21,22) and yoke (23) connecting these of relatively great rigidity in the region of the yoke-side limb ends (region I), and of less rigidity in the region of the free limb ends (region II) in comparison.

2. Housing according to claim 1, characterized by expansion (angle of inclination β) of the free limb ends (11,12) of the sealing edge of the one housing part (lower housing part 1) in the direction of an insertion funnel for the insertable, free limb ends (21,22) of the sealing edge of the other housing part (upper housing part 2).

3. Housing according to claim 1 and/or 2, characterized by an undersize (clearance fit A) of the maximum insertion outer diameter of the sealing edge of the other housing part (upper housing part 2) in the region of the yoke-side limb ends (21,22) in comparison with the inside width between the free limb ends (11,12) of the sealing edge of the one housing part (lower housing part 1).

4. Housing according to claim 1, characterized by a safety bar (25) engaging over the housing-outer limb (11) of the sealing edge of the one housing part (lower housing part 1) and connected to the yoke (23) of the sealing edge of the other housing part (upper housing part 2).

5. Housing according to claim 1, characterized in that the sealing edge of the one housing part (lower housing part 1) and/or the sealing edge of the other housing part (upper housing part 2) are provided with at least one clamping-spring mounting in the direction of a clamping spring which mutually braces the housing parts (1;2) and can be attached from the outside.

6. Housing according to claim 5, characterized in that the one sealing edge of the other housing part (upper housing part 2) is provided with an undercut groove (24) and/or the sealing edge of the one housing part (lower housing part 1) is provided with a stop (14) for the fixable attachment of a clamping spring.

7. Housing according to one of claims 1 to 6, characterized in that the sealing edge of the one housing part (lower housing part 1) and/or the sealing edge of the other housing part (upper housing part 2) and perhaps the safety bar (25) and/or the clamping-spring mountings (stop 14; groove 24) are in each case a one-piece component part of the other housing part (upper housing part 2) or of the one housing part (lower housing part 1).

**Revendications**

1. Boîtier pouvant être assemblé de façon étanche formé d'au moins deux éléments (partie inférieure 1 du boîtier; partie supérieure 2 du boîtier), notamment boîtier en matière plastique moulé par injection ou coulé pour une installation de chauffage ou de climatisation de véhicules automobiles, caractérisé par un premier rebord d'étanchéité situé sur le bord d'application d'une partie du boîtier (partie inférieure 1 du boîtier) comportant un profil en coupe transversale en forme de V ou de U, qui s'ouvre en direction du bord d'application de l'autre partie du boîtier (partie supérieure 2 du boîtier) et comprend des branches (11,12) et une âme (13) reliant ces branches et possédant une rigidité relativement élevée, et un second rebord d'étanchéité situé sur le bord d'application de l'autre partie du boîtier (partie supérieure 2 du boîtier) et possédant un profil antagoniste en forme de V ou de U, qui correspond à la possibilité d'enfichage réalisant une étanchéité réciproque entre les branches (11,12) du premier rebord d'étanchéité, les branches (21,22) et l'âme (23) reliant ces branches présentant une rigidité relativement élevée au niveau des extrémités des branches situées du côté de l'âme (zone I) et une rigidité comparativement plus faible dans la zone des extrémités libres des branches (zone II).

2. Boîtier suivant la revendication 1, caractérisé par un élargissement (angle d'inclinaison β) des extrémités libres (11,12) des branches du rebord d'étanchéité de l'une des parties du boîtier (partie inférieure 1 du boîtier) à la manière d'une trémie d'introduction pour les extrémités libres enfichables (21,22) des branches du rebord d'étanchéité de l'autre partie du boîtier (partie supérieure 2 du boîtier).

3. Boîtier suivant la revendication 1 et/ou 2, caractérisé par le fait que le diamètre extérieur maximum d'enfichage du rebord d'étanchéité de l'autre partie du boîtier (partie supérieure 2 du boîtier) possède, dans la zone des extrémités (21,22) des branches, proches de l'âme, une cote inférieure (adaptation de jeu A) par rapport au passage libre entre les extrémités libres (11,12) des branches du rebord d'étanchéité de l'une des parties du boîtier (partie inférieure 1 du boîtier).

4. Boîtier suivant la revendication 1, caractérisé par une barrette de protection (25), qui s'engage par-dessus la branche (11), extérieure par rapport au boîtier, du rebord d'étanchéité de l'une des parties du boîtier (partie inférieure 1 du boîtier) et reliée à l'âme (23) du rebord d'étanchéité de l'autre partie du boîtier (partie supérieure 2 du boîtier).

5. Boîtier suivant la revendication 1, caractérisé par le fait que le rebord d'étanchéité de l'une des parties du boîtier (partie inférieure 1 du boîtier) et/ou le rebord d'étanchéité de l'autre partie du boîtier (partie supérieure 2 du boîtier) comporte au moins un logement servant à recevoir un ressort de serrage pouvant être emmanché de l'extérieur et serrant réciproquement les parties (1;2) du boîtier.

6. Boîtier suivant la revendication 5, caractérisé par le fait qu'un rebord d'étanchéité de l'autre partie du boîtier (partie supérieure 2 du boîtier) est pourvu d'une rainure en contre-dépouille (24) et/ou que le rebord d'étanchéité de l'une des parties du boîtier (partie inférieure 1 du boîtier) comporte une partie étagée (14) permettant d'y monter, de manière à pouvoir le fixer, un ressort de serrage.

7. Boîtier suivant l'une des revendications 1 à 6, caractérisé par le fait que le rebord d'étanchéité de l'une des parties du boîtier (partie inférieure 1 du boîtier) et/ou le rebord d'étanchéité de l'autre partie du boîtier (partie supérieure 2 du boîtier) et éventuellement la barrette de protection (25) et/ou les logements pour un ressort de serrage (partie étagée 14; rainure 24) font respectivement partie intégrante de l'autre partie du boîtier (partie supérieure 2 du boîtier) ou de l'une des parties du boîtier (partie inférieure 1 du boîtier).

FIG 2

FIG 1

FIG 3